# EUROPÄISCHE PATENTANMELDUNG

(11) **EP 2 256 896 A2**
(43) Veröffentlichungstag der Anmeldung: **01.12.2010**
(21) Anmeldenummer: 10161494.9
(22) Anmeldetag: 29.04.2010
(51) Int. Cl.: H02J 7/00

(54) **Elektrisches Installationsgerät mit Ladegerät für ein Mobiltelefon**

(30) Priorität: 30.05.2009 DE 102009023521
(71) Anmelder: ABB AG, 68309 Mannheim (DE)
(72) Erfinder: Dr.-Ing. Heite, Christian, 58553, Halver (DE)

(57) **Zusammenfassung**

Es wird ein elektrisches Installationsgerät (1, 2) mit einem in Form eines Unterputz-Gerätes ausgebildeten und in eine handelsübliche Unterputzdose (23) montierbaren Gerätesockel (3) vorgeschlagen, welcher ein Schaltnetzteil-Ladegerät (4, 16 - 20) und einen elektrischen Anschluss (5) für ein Wechselspannungsnetz aufweist, wobei frontseitig des Gerätesockels (3) ein Ladeanschlussstecker (9) für den Anschluss eines Mobiltelefons (10) und ein Universalhalter (7) für die Ablage/Halterung dieses Mobiltelefons vorgesehen sind, wobei ein Ein/Aus-Schalter (14) zwischen dem Anschluss (5) und dem Eingang des Ladegerätes (4) angeordnet ist und wobei der Universalhalter (7) über eine mechanische Schalterbetätigung (12, 13) derart auf den Ein/Aus-Schalter (14) einwirkt, dass der Schalter bei eingelegtem Mobiltelefon geschlossen und bei entferntem Mobiltelefon geöffnet ist.

Alternativ ist eine Gegenkopplung (21) zwischen dem Ausgang des Ladegerätes (16 - 20) und einem Schaltregler (20) des Ladegerätes angeordnet, wobei der Schaltregler (20) über die Gegenkopplung (21) erst dann eingeschaltet wird, wenn eine Kontaktierung zwischen dem Ladeanschlussstecker (9) und einer korrespondierender Ladeanschlusssteckbuchse des Mobiltelefons (10) vorliegt.

## Beschreibung

Die Erfindung betrifft ein elektrisches Installationsgerät mit Ladegerät für ein Mobiltelefon.

Zur Aufladung des Akkumulators eines Mobiltelefons ist eine Vielzahl von Ladegeräten bekannt. Um ein Mobiltelefon aufladen zu können, muss man das dazugehörige/passende Ladegerät zur Hand haben, mit dem aufzuladenden Mobiltelefon verbinden und den Stecker des Ladegerätes in eine verfügbare Steckdose einstecken. In unmittelbarer Nähe dieser Steckdose ist dabei oft eine Ablagemöglichkeit für das Mobiltelefon nicht vorhanden. Der Aufbau ist "lose" und "fliegend", d. h. es besteht z. B. das Risiko, dass eine Person über das Netzkabel stolpert oder dass das Netzkabel störend auf der Küchen-Arbeitsplatte liegt und hier den Arbeitsbereich einschränkt.

Der Erfindung liegt die Aufgabe zugrunde, ein elektrisches Installationsgerät mit Ladegerät für ein Mobiltelefon anzugeben, welches ein energieoptimiertes Aufladen eines Mobiltelefons ermöglicht.

Diese Aufgabe wird erfindungsgemäß gelöst durch ein elektrisches Installationsgerät mit einem in Form eines Unterputz-Gerätes ausgebildeten und in eine handelsübliche Unterputzdose montierbaren Gerätesockel, welcher ein Schaltnetzteil-Ladegerät und einen elektrischen Anschluss für ein Wechselspannungsnetz aufweist, wobei frontseitig des Gerätesockels ein Ladeanschlussstecker für den Anschluss eines Mobiltelefons und ein Universalhalter für die Ablage/Halterung dieses Mobiltelefons vorgesehen sind, wobei ein Ein/Aus-Schalter zwischen dem Anschluss und dem Eingang des Ladegerätes angeordnet ist und wobei der Universalhalter über eine mechanische Schalterbetätigung derart auf den Ein/Aus-Schalter einwirkt, dass der Schalter bei eingelegtem Mobiltelefon geschlossen und bei entferntem Mobiltelefon geöffnet ist.

Diese Aufgabe wird alternativ erfindungsgemäß gelöst durch ein elektrisches Installationsgerät mit einem in Form eines Unterputz-Gerätes ausgebildeten und in eine handelsübliche Unterputzdose montierbaren Gerätesockel, welcher ein Schaltnetzteil-Ladegerät und einen elektrischen Anschluss für ein Wechselspannungsnetz aufweist, wobei frontseitig des Gerätesockels ein Ladeanschlussstecker für den Anschluss eines Mobiltelefons und ein Universalhalter für die Ablage/Halterung dieses Mobiltelefons vorgesehen sind, wobei eine Gegenkopplung zwischen dem Ausgang des Ladegerätes und einem Schaltregler des Ladegerätes angeordnet ist und wobei der Schaltregler über die Gegenkopplung erst dann eingeschaltet wird, wenn eine Kontaktierung zwischen dem Ladeanschlussstecker und einer korrespondierender Ladeanschlusssteckbuchse des Mobiltelefons vorliegt.

Die mit der Erfindung erzielbaren Vorteile bestehen insbesondere darin, dass ein Universalladegerät respektive eine an einem dem Anwender bekannten Ort fest installierte, platzsparende Ladestation für nahezu alle gängigen Marken und Typen von Mobiltelefonen als Unterputzgerät in einer handelsüblichen Unterputzdose geschaffen wird. Es ergibt sich ein einfacher Anschluss des Mobiltelefons und Verbinden mit dem Ladeanschlussstecker. Das Mobiltelefon wird während des Ladevorganges sicher im Universalhalter gehalten. Es entfällt jegliches Suchen des passenden Ladegerätes, die Ladestation befindet sich vielmehr immer am gleichen Ort. Zudem kann auch das Mobiltelefon bei Nichtgebrauch einen festen, bekannten Platz im Universalhalter der Ladestation erhalten (auch ohne dass es aufzuladen ist). Es ist eine formschöne Einbindung/Integration in ein Installationsgeräte-Programm respektive Schalter- und Steckdosenprogramm sowie eine Kombination mit weiteren Geräten, beispielsweise Schaltern/Tastern/Dimmern/Steckdosen, dieses Schalter- und Steckdosenprogramms möglich.

In jedem Fall ist das vorgeschlagene Installationsgerät hinsichtlich seines Leistungsverbrauchs im "Standby-Betrieb" optimiert, denn entweder erfolgt eine primärseitige Abschaltung des Ladegerätes durch mechanische Schalterbetätigung oder es erfolgt alternativ eine sekundärseitige Abschaltung des Schaltreglers des Ladegerätes durch Gegenkopplung.

Bei einem Neukauf eines Mobiltelefons wird die vorgeschlagene Ladestation selbstverständlich weiterverwendet. Hierdurch ergibt sich einerseits ein Kostenvorteil, da der Kauf eines neuen Ladegerätes entfällt, andererseits ergibt sich eine Senkung von Industriemüll und damit letztlich eine Senkung des CO2-Ausstosses.

Zweckmäßige Ausgestaltungen der Erfindung sind in den Unteransprüchen gekennzeichnet.

Die Erfindung wird nachstehend an Hand der in der Zeichnung dargestellten Ausführungsbeispiele näher erläutert. Es zeigen:
- Fig. 1: einen seitlichen Schnitt durch ein elektrisches Installationsgerät mit Schaltnetzteil-Ladegerät und Ablagemöglichkeit für ein Mobiltelefon gemäß einer ersten Ausführungsform,
- Fig. 2: einen seitlichen Schnitt durch ein elektrisches Installationsgerät mit Schaltnetzteil-Ladegerät und Ablagemöglichkeit für ein Mobiltelefon gemäß einer zweiten Ausführungsform.

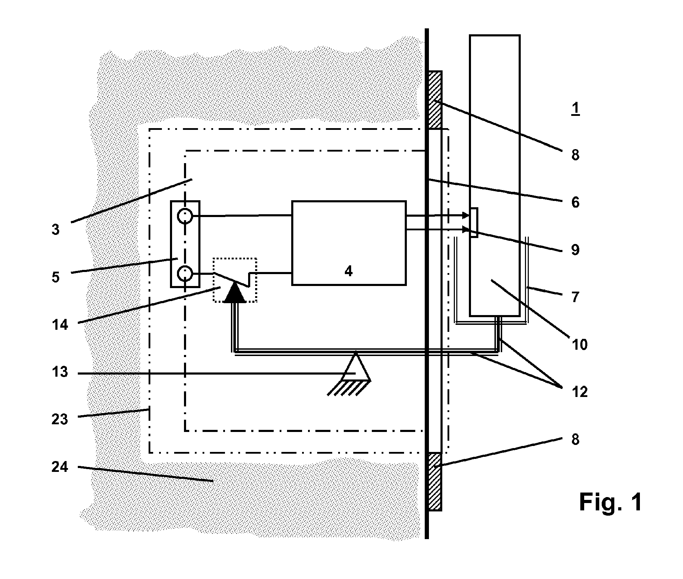

In Fig. 1 ist ein seitlicher Schnitt durch ein elektrisches Installationsgerät mit Schaltnetzteil-Ladegerät und Ablagemöglichkeit für ein Mobiltelefon gemäß einer ersten Ausführungsform dargestellt. Das elektrische Installationsgerät 1 ist in Form eines UP-(Unterputz)-Gerätes mit einem Gerätesockel 3 (Unterputzeinsatz) ausgebildet, welcher ein Schaltnetzteil-Ladegerät 4 inklusive eines Transformators, insbesondere ein für unterschiedliche Mobiltelefone geeignetes Universalladegerät beinhaltet. Ein elektrischer Anschluss 5 (Netzanschluss) des Gerätesockels 3 stellt die elektrische Verbindung zu einem Wechselspannungsnetz her (Netzanschluss) und dient optional auch als Busanschluss. Der Gerätesockel 3 ist über seinen Tragring und/oder über Federspreizen mechanisch mit einer Unterputzdose 23 verbunden, welche in einer Wand 24 installiert ist.

Das elektrische Installationsgerät 1 wird komplettiert durch eine frontseitig zugängliche, den Gerätesockel abdeckende Zentralscheibe 6, einen Abdeckrahmen 8 und einen Universalhalter 7, d. h. eine Universalaufnahme oder Parkstation, welche eine Ablagemöglichkeit (entweder "stehende" oder "liegende" Ablage) für ein Mobiltelefon 10 darstellt, und zwar universell für Mobiltelefone unterschiedlicher Größe und unterschiedlicher Abmessungen.

Ein im Universalhalter 7 eingelegtes Mobiltelefon 10 lässt sich elektrisch mit dem Schaltnetzteil-Ladegerät 4 verbinden, indem ein Ladeanschlussstecker 9, z. B. eine Micro-USB-Standard-Schnittstelle, in die korrespondierende Ladeanschlusssteckbuchse des Mobiltelefons 10 eingesteckt wird. Dabei kann der Ladeanschlussstecker 9 in flexibler Art und Weise über ein Ladekabel mit dem Schaltnetzteil-Ladegerät 4 verbunden sein. Alternativ hierzu kann im Bodenbereich des Universalhalters 7 ein Podest mit einer Anschlussschnittstelle für die Kontaktierung der Ladeanschlusssteckbuchse des Mobiltelefons 10 angeordnet sein.

Für das automatische Ein/Ausschalten des Schaltnetzteil-Ladegeräts 4 wirkt der Universalhalter 7 über ein aus einem elektrisch isolierenden Material gebildetes Betätigungsgestänge 12 auf einen zwischen Anschluss 5 und Schaltnetzteil-Ladegerät 4 angeordneten Ein/Aus-Schalter 14 ein. Durch das Gewicht des in den Universalhalter 7 eingebrachten Mobiltelefons 10 wird das über ein Gelenk 13 gelagerte Betätigungsgestänge 12 am Ort des Universalhalters 7 nach unten gedrückt, wodurch der Ein/Aus-Schalter 14 mechanisch betätigt, d. h. geschlossen wird. Das Schaltnetzteil-Ladegerät 4 liegt nun an Spannung und befindet sich im "Standby-Betrieb". Der Aufladevorgang des Akkumulators des Mobiltelefons 10 wird gestartet, sobald der Ladeanschlussstecker 9 in die korrespondierende Ladeanschlusssteckbuchse des Mobiltelefons 10 eingesteckt ist. Sobald der Ladevorgang beendet ist, kann das Mobiltelefon 10 dem Universalhalter 7 entnommen werden, was zur Folge hat, dass sich das Betätigungsgestänge 12 infolge der Gewichtsentlastung am Ort des Universalhalters 7 wieder nach oben bewegt, wodurch der Ein/Aus-Schalter 14 mechanisch betätigt, d. h. geöffnet wird. Das Schaltnetzteil-Ladegerät 4 ist nunmehr vom elektrischen Anschluss 5 getrennt.

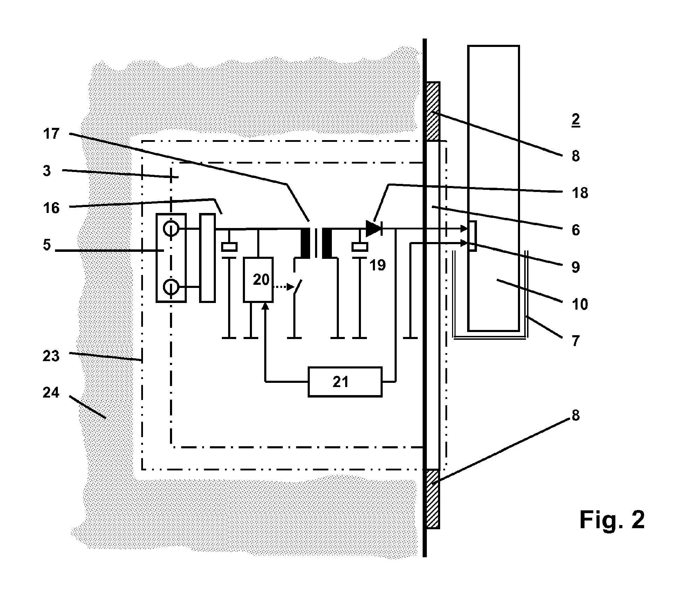

In Fig. 2 ist ein seitlicher Schnitt durch ein elektrisches Installationsgerät mit Schaltnetzteil-Ladegerät und Ablagemöglichkeit für ein Mobiltelefon gemäß einer zweiten Ausführungsform dargestellt. Die Ausführung des elektrischen Installationsgerätes 2 mit einem in einer Unterputzdose 23 montiertem Gerätesockel 3, einem elektrischen Anschluss 5, einer Zentralscheibe 6, einem Universalhalter 7 für ein Mobiltelefon 10, einem Abdeckrahmen 8 und einem Ladeanschlussstecker 9 für den Eingriff in die Ladeanschlusssteckbuchse des Mobiltelefons 10 ist wie unter Fig. 1 erläutert.

Das Schaltnetzteil-Ladegerät weist einen Transformator 17 auf, welcher primärseitig über einen Gleichrichter 16 mit EMI-Filter mit dem Anschluss 5 verbunden ist, wobei der primärseitige Stromfluss mit einem Schaltregler 20 mit elektronischem Schalter eingestellt/geregelt wird. Sekundärseitig erfolgt eine Gleichrichtung mittels einer Diode 18 unter Einsatz eines Speicherkondensators 19. Ausgangsseitig ist die Diode 18 mit dem Ladeanschlussstecker 9 verbunden. Bei dieser zweiten Ausführungsform ist es vorgesehen, das Schaltnetzteil-Ladegerät mit sekundärseitiger Abschaltung durch Gegenkopplung zu betreiben. Hierzu ist eine Gegenkopplung 21, beispielsweise ein Optokoppler, vorgesehen, welcher einerseits an den Ausgang, d. h. an den Verbindungspunkt zwischen Diode 18 und Ladeanschlussstecker 9, andererseits an einen Eingang des Schaltreglers 20 angeschlossen ist. Bei dieser zweiten Ausführungsform erfolgt eine Messung des Sekundär-Ladestromes (Ausgangssignal) bei vorteilhaft sehr geringer "Standby-Leistung" und der Schaltregler 20 wird über die Gegenkopplung 21 erst dann eingeschaltet, wenn eine Kontaktierung zwischen Ladeanschlussstecker 9 und korrespondierender Ladeanschlusssteckbuchse des Mobiltelefons 10 erkannt worden ist (Rückkopplung).

Bei beiden Installationsgeräten 1, 2 kann die Zentralscheibe 6 optional eine optische Anzeige (vorzugsweise mindestens eine LED) zur Signalisierung des Ladevorganges (rote LED kennzeichnet des Ladestatus, grüne LED signalisiert einen geladenen Mobiltelefon- Akkumulator) aufweisen. Des Weiteren kann eine akustische Anzeige zur Signalisierung des Ladevorgang-Endes vorgesehen sein. Ein in der Zentralscheibe integrierter Ein/Aus-Schalter zum Einschalten/Abschalten des Schaltnetzteil-Ladegerätes ist entbehrlich.

Selbstverständlich ist auch eine optische Anzeige in Form eines Displays realisierbar, welches sämtliche Informationen zum Ladevorgang und/oder Status des Mobiltelefons anzeigt. Darüber hinaus sind auch eingehende SMS, Anrufe, Mails usw. des angeschlossenen Mobiltelefons 10 mittels des Displays anzeigbar. Die Kommunikation zwischen dem elektrischen Installationsgerät 1, 2 und dem Display erfolgt zweckmäßig über den erwähnten Anschluss 5 (Busanschluss).

Für beide Installationsgeräte 1, 2, gilt auch, dass die Konfiguration mit Ladeanschlussstecker durch entsprechende austauschbare Adapter derart umgestaltet werden kann, dass Mobiltelefon-Gerätetypen verschiedener Hersteller an ein und demselben Installationsgerät 1, 2 angeschlossen und aufgeladen werden können.

In weiterer Ausgestaltung des vorgeschlagenen Installationsgerätes 1, 2 kann über den Ladeanschlussstecker 9 zusätzlich auch eine Datenanbindung des Mobiltelefons 10 erfolgen, z. B. können über einen Busankoppler Daten des Mobiltelefons in ein Gebäudeleitsystem / Bussystem eines Gebäudes eingespeist und dort zur Anzeige gebracht und/oder weiterverarbeitet werden.

Die Montage des Installationsgerätes 1, 2 erfolgt zweckmäßig in "Griffhöhe", z. B. in Kabelkanälen oder im Küchenbereich oberhalb der Arbeitsplatte.

### Bezuaszeichenliste

- 1: elektrisches Installationsgerät in Form eines UP-Gerätes
- 2: elektrisches Installationsgerät in Form eines UP-Gerätes
- 3: Gerätesockel (Unterputzeinsatz)
- 4: Schaltnetzteil-Ladegerät inklusive Transformator
- 5: elektrischer Anschluss (Netzanschluss)
- 6: Zentralscheibe
- 7: Universalhalter
- 8: Abdeckrahmen
- 9: Ladeanschlussstecker
- 10: Mobiltelefon inklusive Akkumulator und Ladeanschlusssteckbuchse
- 11: -
- 12: Betätigungsgestänge
- 13: Gelenk
- 14: Ein/Aus-Schalter für das Schaltnetzteil-Ladegerät
- 15: -
- 16: Gleichrichter und EMI-Filter
- 17: Transformator
- 18: Diode
- 19: Speicherkondensator
- 20: Schaltregler
- 21: Gegenkopplung (Optokoppler)
- 22: -
- 23: Unterputzdose
- 24: Wand

## Patentansprüche

1. Elektrisches Installationsgerät (1, 2) mit einem in Form eines Unterputz-Gerätes ausgebildeten und in eine handelsübliche Unterputzdose (23) montierbaren Gerätesockel (3), welcher ein Schaltnetzteil-Ladegerät (4) und einen elektrischen Anschluss (5) für ein Wechselspannungsnetz aufweist, wobei frontseitig des Gerätesockels (3) ein Ladeanschlussstecker (9) für den Anschluss eines Mobiltelefons (10) und ein Universalhalter (7) für die Ablage/Halterung dieses Mobiltelefons vorgesehen sind, wobei ein Ein/Aus-Schalter (14) zwischen dem Anschluss (5) und dem Eingang des Ladegerätes (4) angeordnet ist und wobei der Universalhalter (7) über eine mechanische Schalterbetätigung (12, 13) derart auf den Ein/Aus-Schalter (14) einwirkt, dass der Schalter bei eingelegtem Mobiltelefon geschlossen und bei entferntem Mobiltelefon geöffnet ist.

2. Elektrisches Installationsgerät (1, 2) mit einem in Form eines Unterputz-Gerätes ausgebildeten und in eine handelsübliche Unterputzdose (23) montierbaren Gerätesockel (3), welcher ein Schaltnetzteil-Ladegerät (16 - 20) und einen elektrischen Anschluss (5) für ein Wechselspannungsnetz aufweist, wobei frontseitig des Gerätesockels (3) ein Ladeanschlussstecker (9) für den Anschluss eines Mobiltelefons (10) und ein Universalhalter (7) für die Ablage/Halterung dieses Mobiltelefons vorgesehen sind, wobei eine Gegenkopplung (21) zwischen dem Ausgang des Ladegerätes (16 - 20) und einem Schaltregler (20) des Ladegerätes angeordnet ist und wobei der Schaltregler (20) über die Gegenkopplung (21) erst dann eingeschaltet wird, wenn eine Kontaktierung zwischen dem Ladeanschlussstecker (9) und einer korrespondierender Ladeanschlusssteckbuchse des Mobiltelefons (10) vorliegt.

3. Installationsgerät nach einem der vorstehenden Ansprüche, **dadurch gekennzeichnet, dass** eine optische Anzeige zur Signalisierung des Ladevorganges vorgesehen ist.

4. Installationsgerät nach einem der vorstehenden Ansprüche, **dadurch gekennzeichnet, dass** eine akustische Anzeige zur Signalisierung des Ladevorgang-Endes vorgesehen ist.

5. Installationsgerät nach einem der vorstehenden Ansprüche, **dadurch gekennzeichnet, dass** der Ladeanschlussstecker (9) in Form einer Micro-USB-Standard-Schnittstelle ausgebildet ist.

6. Installationsgerät nach einem der vorstehenden Ansprüche, **dadurch gekennzeichnet, dass** der Ladeanschlussstecker (9) durch entsprechende austauschbare Adapter derart umgestaltbar ist, dass unterschiedliche Mobiltelefon-Gerätetypen mit unterschiedlichen Ladeanschlusssteckbuchsen an ein und demselben Installationsgerät (1, 2) anschließbar und aufladbar sind.
